Europäisches Patentamt

European Patent Office

Office européen des brevets

(11) Veröffentlichungsnummer: **0 323 545**
**A1**

## EUROPÄISCHE PATENTANMELDUNG

(21) Anmeldenummer: **88113545.3**

(22) Anmeldetag: **20.08.88**

(51) Int. Cl.⁴: **B23B 27/16 , B23D 13/00**

(30) Priorität: **08.12.87 CH 4784/87**

(43) Veröffentlichungstag der Anmeldung:
**12.07.89 Patentblatt 89/28**

(84) Benannte Vertragsstaaten:
**AT BE FR GB IT NL SE**

(71) Anmelder: **Maag-Zahnräder und -Maschinen Aktiengesellschaft**
**Hardstrasse 219**
**CH-8023 Zürich(CH)**

(72) Erfinder: **Kromer, Roland**
**Mühlenstrasse 91**
**D-7505 Ettlingen(DE)**

(74) Vertreter: **Travnicek, Richard**
**MAAG-ZAHNRÄDER & -MASCHINEN AG**
**Patentabteilung Hardstrasse 219**
**CH-8023 Zürich(CH)**

(54) **Stoss- oder Ziehwerkzeug.**

(57) Stoss- oder Ziehwerkzeug, bei welchem eine Schneidplatte erster Art (2) mit einer Justiereinrichtung exakt lagepositioniert werden kann, um hochgenaue Profile herzustellen. Durch Anordnung einer Schneidplatte zweiter Art (5) kann eventuell in einem Arbeitsgang, mindestens aber in einer Aufspannung, eine weitere Fläche des Werkstückes in einer bestimmten Relativlage zum Profil bearbeitet werden.

Fig. 1a

EP 0 323 545 A1

Die Erfindung bezieht sich auf ein Stoss- oder Ziehwerkzeug gemäss dem Oberbegriff des Anspruches 1.

Aufgabe der Erfindung ist es, ein Stoss- oder Ziehwerkzeug der genannten Art so zu verbessern, dass wenigstens eine Schneidplatte dauerhaft so exakt positioniert werden kann, dass hochgenaue Werkstücke fertigbar sind, wobei die Schneidplatte leicht und ohne Spezialwerkzeuge auswechselbar sein soll. Nach einer zusätzlichen Aufgabe zur Weiterbildung dieses Werkzeuges soll es möglich sein, in einer Aufspannung eines Werkstückes Profilflächen und Kopfflächen zwischen den Profilflächen bearbeiten zu können.

Diese Aufgaben lassen sich lösen durch die Merkmale des kennzeichnenden Teiles des Anspruchs 1.

Ausserdem kann das erfindungsgemässe Werkzeug die Merkmale der Ansprüche 2 - 10 aufweisen.

Weitere Einzelheiten ergeben sich aus der Beschreibung zweier Ausführungsbeispiele der Erfindung anhand der Zeichnung. In dieser zeigt

Fig. 1a eine Untersicht einer ersten Variante des Werkzeuges

Fig. 1b einen Schnitt b-b des Werkzeuges nach Fig. 1a

Fig. 2a eine Untersicht einer zweiten Variante des Werkzeuges

Fig. 2b einen Schnitt des Werkzeuges nach Fig. 2a

Ein Schneidplattenhalter 1 ist zur Aufspannung auf einem Werkzeugträger (nicht dargestellt) eingerichtet und weist im Bereich einer seiner Stirnseiten eine Auflagefläche 8 für eine Schneidplatte 1. Art 2 auf, welche einen spitzen Winkel mit einer der Stirnseiten einschliesst. Beidseits dieser Auflagefläche 8 sind auf dem Schneidplattenhalter 1 Gegenhalter 9 einstückig angeformt, welche Anlageflächen 16 zur Anlage an der Schneidplatte 1. Art 2 aufweisen. Benachbart zu diesen Anlageflächen 16 und quer zu beiden ist im Schneidplattenhalter 1 eine nutartige Ausnehmung 11 angeordnet, welche halbtrapezförmigen Querschnitt hat, wobei der geneigte Trapezschenkel sich im Bereich der Gegenhalter 9 und der Auflagefläche 8 befindet und tiefer in den Schneidplattenhalter 1 ragt als die Auflagefläche 8, sodass zwischen beiden ein Absatz vorhanden ist. Diese Ausnehmung 11 gehört zu einer Justiereinrichtung 10, welche ausserdem einen in dieser Ausnehmung 11 sitzenden Justierstein 12 als Klemmmittel aufweist, welcher ebenfalls halbtrapezförmig ausgebildet und dessen Höhe aber kleiner ist als die Tiefe der Ausnehmung 11. Im Bereich der Ausnehmung 11 befindet sich wenigstens eine Absatzbohrung 13 durch welche je eine Justierschraube 14 ragt und in den Justierstein 4 einschraubbar ist. Die Schneidplatte 1. Art 2 ist ihrerseits mit einer Klemmschraube 1. Art 3 auf dem Schneidplattenhalter 1 befestigt. Versetzt am Schneidplattenhalter 1 ist eine weitere Vertiefung 15 als Auflagefläche, welche ebenfalls unter einem spitzen Winkel zur Stirnfläche des Schneidplattenhalters 1 angeordnet ist, für eine Schneidplatte 2. Art 5 vorgesehen. Diese ist mit einer Klemmschraube 2. Art 6 am Schneidplattenhalter 1 befestigt. Die Lage der Schneidplatte 2. Art 6 zur Schneidplatte 1. Art 2 ist definiert durch die Lage der am Werkstücke mit jeder der beiden Schneidplatten zu bearbeitenden Flächen.

An vom herzustellenden Profil und dessen Herstellungverfahren abhängigen Stellen können auch noch mehrere Schneidplatten 1. Art 2 am Schneidplattenhalter 1 vorgesehen sein.

Nach dem Aufsetzen der Schneidplatte 1. Art 2 und der provisorischen Befestigung mit der Klemmschraube 1. Art 3 wird mit der Justiereinrichtung 10 durch Nachstellen der Justierschrauben 14 die Schneidplatte 1. Art 2 in die für die Werkstückbearbeitung, unter Wahrung der gewünschten Genauigkeit, erforderliche Position gebracht und hernach mit der Klemmschraube 1. Art 3 definitiv festgeklemmt. Eventuell wird die Lage der Schneidkanten der Schneidplatte 1. Art 2 zu wenigstens einer Bezugsfläche oder Bezugsachse des Schneidplattenhalters 1 mit Messinstrumenten kontrolliert. Die Schneidplatte 2. Art 5 wird mit der Klemmschraube 2. Art 6 auf dem Schneidplattenhalter 1 befestigt und entsprechend den Genauigkeitsanforderungen die Lage der Schneide zu wenigstens einer Bezugsfläche oder Bezugsachse oder zu wenigstens einer Schneide der Schneidplatte 1. Art 2 mit Messinstrumenten kontrolliert.

Zufolge der Anordnung einer Schneidplatte 2. Art 5 auf dem Schneidplattenhalter 1 kann, eventuell in einem Arbeitsgang, mindestens aber in einer Aufspannung, eine weitere Fläche des Werkstückes, welche sich in einer bestimmten Relativlage zum mit der Schneidplatte 1. Art 2 hergestellten Profil befindet, bearbeitet werden. Dies erspart entweder einen zusätzlichen Arbeitsgang oder eine zusätzliche Aufspannung mit all den Verlustzeiten.

Eine zweite Ausführungsform eines erfindungsgemässen Stoss- oder Ziehwerkzeuges weist einen Schneidplattenhalter 21 auf, an welchem auf einer seiner Stirnseiten eine Auflagefläche 23 für eine Schneidplatte 2. Art 22, geneigt unter einem spitzen Winkel zur benachbarten Stirnfläche, vorgesehen ist. Im Bereich der innenliegenden Begrenzung der Auflagefläche 23 ist eine Entlastungsbohrung 29 vorgesehen. Im Zentrumsbereich der Auflagefläche 23 ist eine Justiereinrichtung 30, enthaltend eine zur anderen Stirnseite des Schneidplattenhalters 21 gehende Justierbohrung 31, die in einem Justierabschnitt eine Justierausnehmung 32 aufweist, deren Bodenfläche 33 zur Achse der Justierbohrung 31 unter einem eher kleinen, spitzen Winkel 34 geneigt ist. Ausserdem weist die Justierbohrung 31 im Bereich dieser Justierausnehmung 32 einen verengten Abschnitt 35 auf, um eine Klemmschraube 24 ortsfest zu halten. In diesen wird von der Seite der Justierausnehmung 32 eine Justierschraube 36 mit Innengewinde eingesetzt und in diese die Klemmschraube 24, welche durch die Schneidplatte 22 und die Justierbohrung 31 geführt ist, eingeschraubt, welche die Schneidplatte 22 an der Auflagefläche 23 festklemmt. Seitlich benachbart zur Auflagefläche 23 befinden sich, über diese aufragend, Positionierflächen 25, welche mit der Form der Schneidplatte 22 in diesem Bereich korrespondieren. Insbesondere ist bei der Justierschraube 36 und der Klemmschraube 24 ein Feingewinde vorgesehen.

Die Schneidplatte 22 wird mittels der Klemmschraube 24, die in die Justierschraube 36 als Gegenschraube eingeschraubt wird, auf die Auflagefläche 23 gepresst und durch den spitzen Winkel 34 zwischen der Schulter der Justierschraube 36 und der Bodenfläche 33 der Justierausnehmung 32 etwas verkantet, so dass, entsprechend der Verschraubungskraft, eine resultierende Kraft auf die Schneidplatte 22 in Richtung auf die Positionierflächen 25 ausgeübt wird. Diese resultierende Kraft bewirkt eine Anpressung an die Positionierflächen 25 und somit eine exakte Positionierung der Schneidplatte.

## BEZUGSZEICHEN

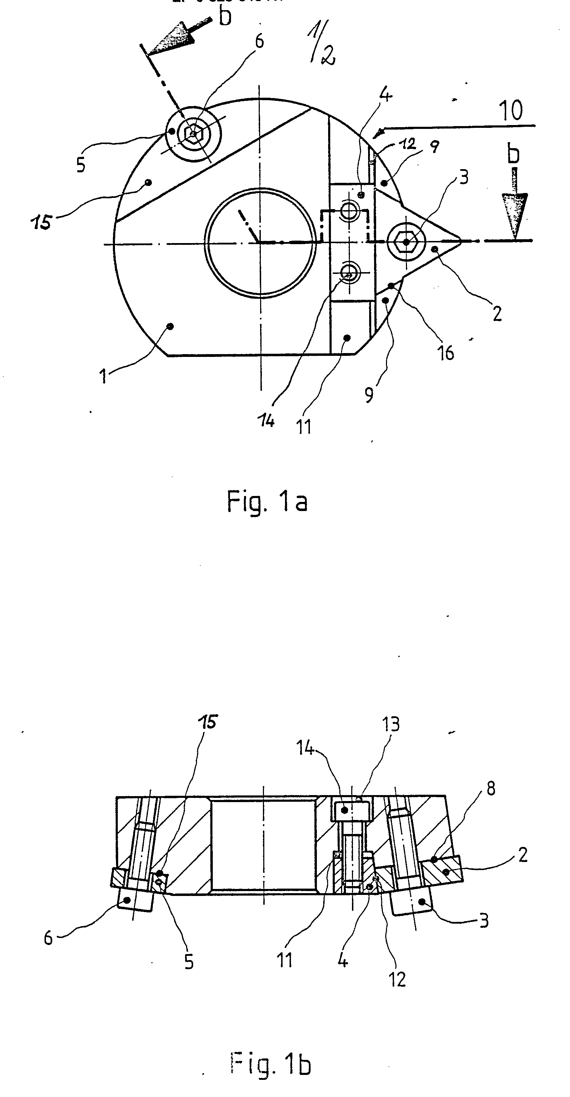

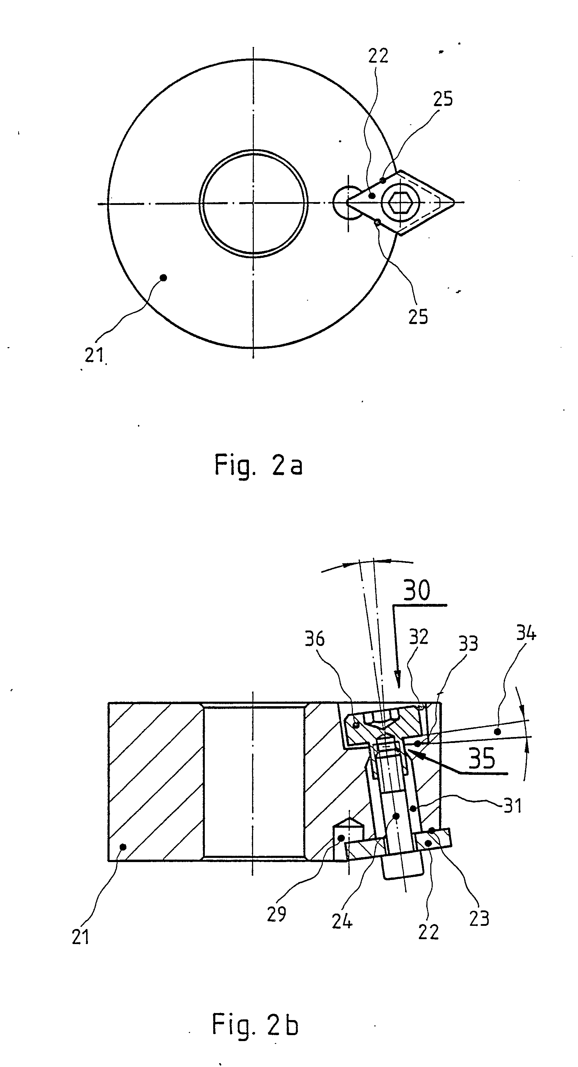

1 ... Schneidplattenhalter (Fig. 1)
2 ... Schneidplattenhalter (Fig. 1)
3 ... Klemmschraube 1. Art
4 ... Klemmittel/Justierstein
5 ... Schneidplatte 2. Art
6 ... Klemmschraube 2. Art
7 ...
8 ... Auflagefläche für Schneidplatte 1. Art
9 ... Gegenhalter
10 ... Justiereinrichtung
11 ... Ausnehmung
12 ... Keilfläche
13 ... Absatzbohrung
14 ... Justierschraube
15 ... Vertiefung
16 ... Anlageflächen der Gegenhalter
17 ...
18 ...
19 ...
20 ...
21 ... Schneidplattenhalter (Fig. 2)
22 ... Schneidplatte

23 ... Auflagefläche
24 ... Klemmschraube/Klemmittel
25 ... Positionierflächen
26 ...
27 ...
28 ...
29 ... Entlastungsbohrung
30 ... Justiereinrichtung
31 ... Justierbohrung
32 ... Justierausnehmung
33 ... Bodenfläche der Justierausnehmung/Justierauflagefläche
34 ... Winkel zwischen Bodenfläche und Achse Justierbohrung
35 ... Passabschnitt der Justierbohrung 31
36 ... Justierschraube

## Ansprüche

1) Stoss- oder Ziehwerkzeug zum Herstellen von Innen-oder Aussenprofilen mit einem in einer Werkzeugmaschine einspannbaren Schneidplattenhalter und einer an diesem befestigten Schneidplatte, dadurch **gekennzeichnet**, dass wenigstens eine Schneidplatte (2, 5 oder 22) mit einer Justiereinrichtung (10, 30) im Schneidplattenhalter (1, 21) festklemmbar ist.

2) Stoss- oder Ziehwerkzeug nach Anspruch 1, dadurch **gekennzeichnet**, dass wenigstens eine Schneidplatte 1. Art (2) mit einer Justiereinrichtung (10) und eine andere Schneidplatte 2. Art (5) ohne Justiereinrichtung im Schneidplattenhalter (1, 21) festklemmbar ist.

3) Stoss- oder Ziehwerkzeug nach Anspruch 1 oder 2, dadurch **gekennzeichnet**, dass der Schneidplattenhalter (1) eine Auflagefläche (8) für die Schneidplatte 1. Art (2) und ein quer zu dieser verlaufendes, angrenzend liegendes Klemmmittel (4) aufweist, wobei benachbart zur Auflagefläche (8) einerseits eine Ausnehmung (11) zur Anlage und Abstützung der Justiereinrichtung (10) und andererseits wenigstens ein Gegenhalter (9) zur Positionierung der Schneidplatte (2) vorgesehen ist.

4) Stoss- oder Ziehwerkzeug nach Anspruch 3, dadurch **gekennzeichnet**, dass die Gegenhalter (9) Gegenflächen, welche zueinander einen Winkel einschliessen, zur Anlage je an einer Fläche einer Schneidplatte 1. Art (2) aufweisen.

5) Stoss- oder Ziehwerkzeug nach Anspruch 3. dadurch **gekennzeichnet**, dass die zur Justiereinrichtung (10) benachbarte Auflagefläche (8) für die Schneidplatte (2) auf dem Schneidplattenhalter (1) zu dessen Stirnflächen um einen Winkel geneigt ist.

6) Stoss- oder Ziehwerkzeug nach einem der Ansprüche 1 bis 3 oder 5, dadurch **gekennzeichnet,** dass die Justiereinrichtung (10) ein in der Ausnehmung (11) sitzender und verschieden tief einziehbarer Justierstein (4) ist, der mit wenigstens einer sich im Schneidplattenhalter (1) abstützenden Justierschraube (14) verstellbar ist und mit einer Keilfläche (12) an der Schneidplatte (2) anliegt und je nach seiner Lage auf dem Schneidplattenhalter die Schneidplatte (2) relativ zu den Gegenhaltern (9) positioniert.

7) Stoss- oder Ziehwerkzeug nach Anspruch 1 oder 2, dadurch **gekennzeichnet,** dass die Schneidplatte 1. Art (2) im wesentlichen dreieckige Form aufweist, mit einer Dreiecksseite an der Justiereinrichtung (10) zur Anlage bringbar und zur Aufspannung an dem Schneidplattenhalter (1) eingerichtet ist, wobei wenigstens eine Dreiecksseite wenigstens eine Schneidkante aufweist.

8) Stoss oder Ziehwerkzeug nach Anspruch 1 oder 2, dadurch **gekennzeichnet,** dass die Schneidplatte in einer 2. Art (5) im wesentlichen runde Form aufweist, in einer zur Stirnfläche des Schneidplattenhalters (1) geneigten Vertiefung (15) zur Anlage gebracht wird und wenigstens eine Seite als Schneidkante ausgebildet ist.

9) Stoss- oder Ziehwerkzeug nach Anspruch 1 oder 2, dadurch **gekennzeichnet,** dass der Schneidplattenhalter (21) eine Auflagefläche (23) für die Schneidplatte (22) und eine senkrecht zur Auflagefläche sich erstreckende Bohrung (31) zur Aufnahme eines Klemmittels (24) aufweist, wobei benachbart zur Auflagefläche (23) seitliche Anlageflächen (25) zur Positionierung und Abstützung der Schneidplatte (22) vorgesehen sind.

10) Stoss- oder Ziehwerkzeug nach Anspruch 9, dadurch **gekennzeichnet,** dass die Justiereinrichtung (30) eine durch die Justierbohrung (31) der Schneidplatte (22) gehende Klemmschraube (24) ist, welche sich über eine Gegenschraube (36) am Schneidplattenhalter (21) abstützt, wobei die Justierschraube (36) auf einer Justierauflagefläche (33) aufliegt, welche gegenüber der Auflagefläche (23) der Schneid platte (22) einen Winkel (34) einschliesst, der ein Positionieren der Schneidplatte (22) an den Anlageflächen (25) beim Anziehen der Justierschraube (36) als Folge einer Vorspannung der Justiereinrichtung auf die Schneidplatte (22) ermöglicht.

Fig. 1a

Fig. 1b

Fig. 2a

Fig. 2b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-2 936 679 (THUERWACHTER) * Spalte 10, Zeilen 28-51; Figuren 3-6 * | 1. | B 23 B 27/16 B 23 D 13/00 |
| A | | 5 | |
| Y | FR-A-2 465 543 (ELECTRO-METALLURGIE) * Ansprüche 1,2; Figuren 1,2 * | 1 | |
| A | | 2,3 | |
| Y | DE-U-1 699 466 (FROEMAG) * Seiten 2,3; Figuren 1,2 * | 1 | |
| A | | 3,6 | |
| A | US-A-3 497 934 (HUDSON) * Anspruch 1; Figuren 1,2,4 * | 1,7 | |
| A | CH-A- 572 781 (KRAFTWERK UNION) * Spalte 2, Zeile 48 - Spalte 3, Zeile 16; Figuren 3,4 * | 1,3,7 | |
| A | PATENT ABSTRACTS OF JAPAN Band 4, Nr. 105 (M-23)(587), 26.07.1980; JP - A - 55 65004 (NIPPON TOKUSHU) 16.05.1980 * Seite 150 * | 1,3,4,6 ,7 | RECHERCHIERTE SACHGEBIETE (Int. Cl.4) B 23 B 27/00 B 23 D 13/00 B 23 F 21/00 |
| A | DE-C- 921 294 (WESSON MULTICUT) * Seite 1, Zeilen 11-16; Figur 6 * | 2 | |
| A | US-A-2 289 344 (CEDARLEAF) * Seite 1, linke Spalte, Zeilen 23-40; Figuren 1-3 * | 2,8 | |
| A | FR-A-1 347 086 (GARIH) * Seite 2; Figuren 6,9 * -/- | 5,7 | |

Der vorliegende Recherchenbericht wurde für alle Patentansprüche erstellt

| Recherchenort | Abschlußdatum der Recherche | Prüfer |
|---|---|---|
| BERLIN | 07-03-1989 | MARTIN A E W |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | SOVIET INVENTIONS ILLUSTRATED Derwent Publications Ltd., Sektion Mechanik; Woche K 13, Zusammenfassung Nr. E 3092, P54, 11.05.1983; & SU - A - 92 9338 (TEKHNOLOG) 23.05.1982 ----- | 10 | |

**RECHERCHIERTE SACHGEBIETE (Int. Cl.4)**

Der vorliegende Recherchenbericht wurde für alle Patentansprüche erstellt

| Recherchenort | Abschlußdatum der Recherche | Prüfer |
|---|---|---|
| BERLIN | 07-03-1989 | MARTIN A E W |

EPO FORM 1503 03.82 (P0403)